# EUROPEAN PATENT APPLICATION

(11) **EP 4 628 724 A1**
(43) Date of publication of application: **08.10.2025**
(21) Application number: 24168416.6
(22) Date of filing: 04.04.2024
(51) Int. Cl.: F03D 1/06

(54) **A WIND TURBINE ROTOR BLADE WITH A TIP SECTION**

(71) Applicant: Nordex Energy SE & Co. KG, 22419 Hamburg (DE)
(72) Inventor: Doosttalab, Mehdi, 22419 Hamburg (DE)
(74) Representative: Hauck Patent- und Rechtsanwälte PartmbB

(57) **Abstract**

A wind turbine rotor blade comprising
• a root section defining a pitch axis,
• a tip section including a blade tip and a chord line,
• a blade length,
• a leading edge,
• a trailing edge, and
• a local chord length measured between the leading edge and the trailing edge,
• wherein a reference plane is defined such that it includes the pitch axis and such that the chord line is normal to the reference plane, characterised in that
• in the tip section, the trailing edge is an essentially straight line arranged at an angle in a range of 0° to 20° with reference to the reference plane.

## Description

The invention relates to a wind turbine rotor blade having a root section defining a pitch axis and a tip section including a blade tip and a chord line.

The design of the tip section plays an important role when trying to reduce noise originating from a wind turbine rotor in operation.

The final report dated June 30, 1997 entitled "Geräuschminderung durch Modifikation der Blattspitze, der Blatthinterkante und des Anstellwinkels von Windkraftanlagen" on a research project coordinated by "Deutsches Windenergie-Institut" and "Fördergesellschaft Windenregie" (BMBF Förderkennzeichen: 0329669) compared wind turbine rotor blades with three different tip sections having different shapes. The tip section that caused the lowest noise emission has a planform with a relatively straight leading edge and a more rounded trailing edge, and in this regard resembles a tip section-shape typical of modem wind turbine rotor blades.

The document EP 1 775 646 A2 shows a wind turbine rotor blade drawn with a substantially triangular tip shape.

The document EP 2 028 366 B1 shows a wind turbine rotor blade drawn with a straight leading edge.

The document EP 2 682 602 B1 discloses a wind turbine rotor blade having a tip section with a conventional planform. Near the tip, the aerodynamic profiles have their maximum thickness shifted closer to the leading edge.

Departing therefrom, it is an object of the invention to provide a wind turbine rotor blade having a tip section leading to reduced noise levels and good aerodynamic performance.

This object is solved by the wind turbine rotor blade with the features of claim 1. Preferred aspects are given in the dependent claims.

The wind turbine rotor blade comprises:
- a root section defining a pitch axis,
- a tip section including a blade tip and a chord line,
- a blade length,
- a leading edge,
- a trailing edge, and
- a local chord length measured between the leading edge and the trailing edge,
- wherein a reference plane is defined such that it includes the pitch axis and such that the chord line is normal to the reference plane, wherein
- in the tip section, the trailing edge is an essentially straight line arranged at an angle in a range of 0° to 20° with reference to the reference plane.

The wind turbine rotor blade may be designed for a wind turbine having a rotor with an essentially horizontal axis. The wind turbine may be operated at variable rotor speed and at varying pitch angles. To this end, the wind turbine rotor may comprise one or more of the wind turbine rotor blades mounted to a rotor hub via a pitch bearing, so that the pitch angle can be controlled with a pitch drive. Typically, the wind turbine rotor will have two or three wind turbine rotor blades.

The wind turbine rotor blade has a root section adapted for being mounted to a wind turbine rotor hub, for example by a bolted connection to a pitch bearing. For this reason, the root section defines a pitch axis generally corresponding to a longitudinal axis of the wind turbine rotor blade. The root section may have a circular cross-section.

The wind turbine rotor blade may be provided in one part extending from a blade root to the blade tip. In the alternative, the wind turbine rotor blade may be provided in any number of longitudinal segments assembled to form the entire wind turbine rotor blade by connecting neighbouring longitudinal segments with one another. The wind turbine rotor blade or the respective longitudinal segments may themselves be manufactured by connecting any number of wind turbine rotor blade shell members, such as first and second half shells.

The blade length of the wind turbine rotor blade is measured from the blade root to the blade tip. The blade length may be 60 m or more, for example.

The wind turbine rotor blade has an aerodynamic profile over all or most of the blade length, in particular with the exception of the root section, which may have a circular cross-section.

In each cross-section, the position of the leading edge and the position of the trailing edge are defined with reference to an airstream passing by the wind turbine rotor blade in operation. The trailing edge is defined at the point of the cross-section where the airstream is passing by last. The leading edge is defined at the point in the same cross-section located at the largest distance from the trailing edge. For aerodynamic profiles having a flat section at thickened trailing edge, the trailing edge is defined as the midpoint of the flat section.

A chord or chord line of the aerodynamic profile is defined in each cross-section as the connection between the leading edge and the trailing edge. The length and the angular position of the chord line varies over the blade length. The variation of the angular position of the chord line is larger towards the blade root section, while in the tip section, the angular position of the chord line is almost constant, that is arranged at a fixed angle with reference to a rotor plane. This angle, however, depends on the selected pitch angle.

For these reasons, a reference plane of the wind turbine rotor blade is defined, without making reference to a rotor plane, such that it includes the pitch axis and such that the chord line in the tip section is normal to the reference plane. When operating the wind turbine rotor blade, in particular at partial load, the reference plane is typically arranged at an angle close to 90° with reference to the rotor plane. The exact angle depends on the design of the wind turbine rotor and the selected pitch angle.

In the tip section, the trailing edge is an essentially straight line arranged at an angle in a range of 0° to 20° with reference to the reference plane. The essentially straight line is straight or almost straight. This specific shape and arrangement of the trailing edge in the tip section means that the air passing by the tip section will flow beyond the trailing edge without accumulating excessive turbulence caused by a rounded or angled trailing edge. This leads to considerably less noise originating from the tip section.

Theoretically, this effect will be strongest when the trailing edge in the tip section is an exactly straight line arranged at an angle of 0° with reference to the reference plane. In practice, however, some deviation is possible, so the trailing edge in the tip section may include some slight curvature, so that it is not perfectly, but still essentially straight. With regard to the angle of the trailing edge with reference to the reference plane, the range of 0° to 20° was found to lead to significant noise reduction compared to a conventional tip section. However, the range of 0° to 15°, 0° to 10° or even only 0° to 5° may be preferred.

Overall, the inventive wind turbine rotor blade design has the advantage that less noise is emitted, while only the wind turbine rotor blade's tip section needs to be modified with respect to a conventional wind turbine rotor blade.

In an aspect, the tip section has a length in a range of 0.2 % to 1.5 % of the blade length measured from the blade tip. In other words, the tip section is a relatively short portion of the wind turbine rotor blade. For example, when the blade length is 75 m, the tip section length has a range of 15 cm to 112.5 cm.

In an aspect, the leading edge in the tip section has a radius of curvature smaller than four times the maximum of the local chord length in the tip section. This leads to an aerodynamically efficient tip section. The relatively small radius of curvature of the leading edge may lead to some additional turbulences, but these will be overcompensated by the positive effect of the essentially straight trailing edge.

In an aspect, the tip section comprises a rounded section at the blade tip extending over less than 0.05 % of the blade length. For manufacturing as well as for handling and/or stability reasons, it may be difficult to extend the straight trailing edge up to the blade tip, although this would be the aerodynamically best solution. It is therefore acceptable to provide a small, rounded section at the blade tip, the rounded section comprising the outermost ends of the leading and trailing edges. However, to benefit from the straight trailing edge in the tip section, this rounded section should be very short. The indicated range for a blade length of 75 m corresponds to 37.5 mm.

In an aspect, the blade tip is arranged in the reference plane. This corresponds to a wind turbine rotor blade that does not have a longitudinal axis curved in the rotor plane, often referred to as a sweep. The inventor found that arranging the blade tip in the reference plane in combination with the essentially straight trailing edge of the tip section significantly adds to the stability of air flow near the tip section, in particular when taking into account dynamic effects when adjusting the pitch angle.

In an aspect, the wind turbine rotor blade comprises a pre-bend. A pre-bend is often applied to obtain under load a larger spacing between the wind turbine rotor blade and the wind turbine tower. The longitudinal axis of the rotor blade has a curvature which leads to a distance between the longitudinal axis and the pitch axis growing in the direction towards the blade tip. At the blade tip, the distance to the pitch axis may be for example in the range of 1 % to 10 % of the blade length.

In an aspect, in the tip section, the trailing edge is located at a distance from the reference plane in a range of 0 % to 10 % of the local chord length. This means, the aerodynamic profiles of the tip section are shifted with reference to a conventional tip section towards the leading edge. In particular, the chord position where the aerodynamic profile has its maximum thickness will be arranged in a relatively large distance (of for example 50 % or more of the local chord length) from the reference plane. Because the tip section is relatively short, this forward shift does not lead to structural difficulties.

In an aspect, in the tip section the leading edge is located at a distance from the reference plane in a range of 100 % to 90 % of the local chord length. This also means that the aerodynamic profiles in the tip section are shifted in a forward direction. At each longitudinal position within the tip section, the distance of the trailing edge from the reference plane plus the difference from the leading edge from the reference plane add to 100%, corresponding to the local chord length.

In an aspect, in the tip section, the position along the local chord length where an aerodynamic profile of the tip section has its maximum thickness is located at a distance from the reference plane in the direction towards the leading edge. As mentioned before, the inventor realised that, given the fact that the tip section is relatively short, this does not lead to structural difficulties.

In an aspect, the wind turbine rotor blade comprises a main section extending from a longitudinal position where the local chord length is maximum to a longitudinal position of 70% of the blade length measured from the blade root, wherein in the main section the trailing edge is located at a distance from the reference plane in a range of 40% to 90% of the local chord length. The main section may extend to a longitudinal position of 90% or 95% of the blade length, that is relatively close to the longitudinal position of the wind turbine rotor blade where the tip section begins. In the entire main section, the trailing edge is located at a significant distance from the reference plane, similar to a conventional wind turbine rotor blade. This illustrates that the inventive solution requires modifying essentially the tip section only.

In an aspect, the wind turbine rotor blade comprises a main section extending from a longitudinal position, where the local chord length is maximum, to a longitudinal position of 70% of the blade length measured from the blade root, wherein in the main section, the leading edge is located at a distance from the reference plane in a range of 10 % to 60 % of the local chord length. Again, the main section may extend also to a longitudinal position of 90 % or 95 % of the blade length. In the entire main section, the leading edge is located at a distance from the reference plane. In particular, the leading edge can be located at a distance from the reference plane in a range of 10 % to less than 50 % of the local chord length, so at each longitudinal position, this distance is less than the distance of the trailing edge from the reference plane. The distance between the trailing edge and the reference plane plus the distance from the leading edge and the reference plane add up to 100% of the local chord length.

In an aspect, the wind turbine rotor blade comprises a transition section arranged between the main section and the tip section, wherein in the transition section the trailing edge transitions from its position in the main section into its position in the tip section, and/or the leading edge transitions from its position in the main section into its position in the tip section. This solution provides a smooth transition between the main section, which may correspond to a conventional wind turbine rotor blade design, and the tip section modified in accordance with the invention. In particular, the transition section may be relatively short, such as 25 % or less, 20 % or less, 10 % or less or 5 % or less of the blade length.

In the following, the invention is explained in greater detail based on drawings. The drawings show:
- Fig. 1: a wind turbine,
- Fig. 2: a tip section of a conventional wind turbine rotor blade,
- Fig. 3: a wind turbine rotor blade of the invention, and
- Fig. 4: the tip section of the wind turbine rotor blade of Fig. 3.

All figures are schematic and not drawn to scale.

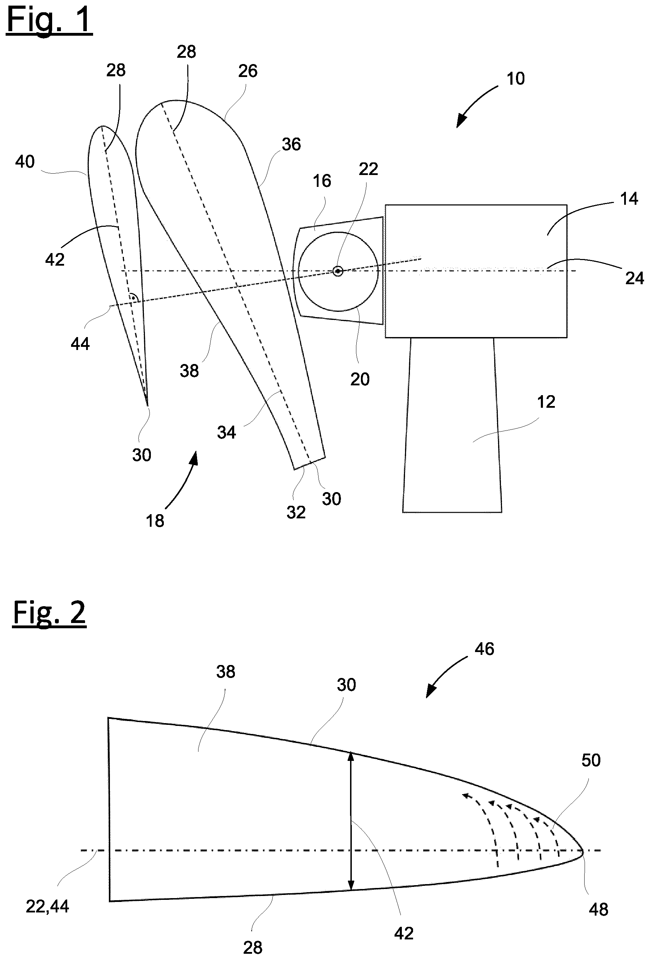

The wind turbine 10 of Fig. 1 has a wind turbine tower 12, a nacelle 14, a wind turbine rotor comprising a wind turbine rotor hub 16 with a rotational axis 24, which is arranged approximately horizontally, and with three wind turbine rotor blades 18. Only one of the wind turbine rotor blades 18 is illustrated in Fig. 1, and only by means of three cross-sections through the wind turbine rotor blade 18.

A first cross-section shown corresponds to the wind turbine rotor blade's root section 20 which is circular and which is connected to the wind turbine rotor hub 16 via a pitch bearing. The geometry of the root section 20 defines a pitch axis 22 of the wind turbine rotor blade. The pitch axis 22 in Fig. 1 is normal to the drawing plane and is therefore indicated by a small circle with a midpoint.

A second cross-section of the wind turbine rotor blade 18 corresponds to a main section 26 of the wind turbine rotor blade 18. The main section 26 has an aerodynamic profile with a leading edge 28 and a trailing edge 30. At the trailing edge 30, the aerodynamic profile has a flat section 32. The leading edge 28 and the trailing edge 30 are connected by a chord line 34. The aerodynamic profile of the main section 26 also has a suction side 36 and a pressure side 38.

A third cross-section of the wind turbine rotor blade 18 is located within the tip section 40. The tip section 40 also has a leading edge 28, a trailing edge 30 and a chord line 42. The reference plane 44 used to describe the shape and/or position of the trailing edge 30 of the tip section 40 is arranged such that it includes the pitch axis 22 and such that the chord line 42 is normal to the reference plane 44.

Figure 2 shows a conventional tip section 46, with a view on the pressure side 38. The tip section 46 has a leading edge 28 and a trailing edge 30 as well as a blade tip 48. In Fig. 2, the chord line 42 is in the drawing plane, and the reference plane 44 is normal to the drawing plane. In this conventional design, the trailing edge 30 comprises a curvature having a radius decreasing towards the blade tip 48. Airflow passing by the tip section 46 therefore tends to become instable and turbulent.

The direction of flow at the pressure side 38 near the blade tip 48 is illustrated by the arrows 50. It can be seen that flow direction deviates from the direction of the chord line, which leads to turbulences and contributes notably to the noise emissions. The blade tip 48 of the conventional rotor blade is lying in the reference plane 44.

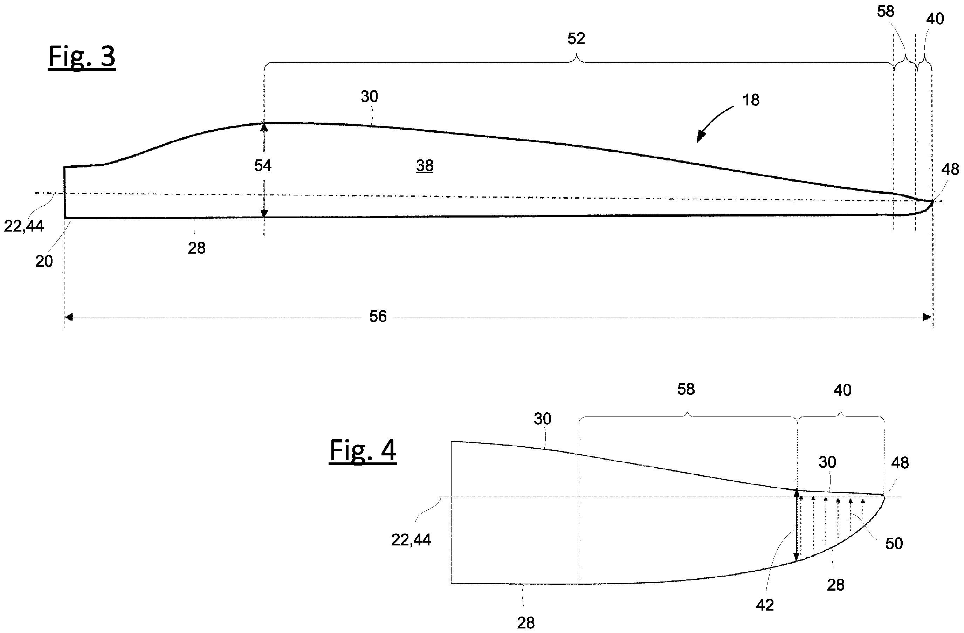

Figure 3 shows an inventive wind turbine rotor blade 18. It has a root section 20 defining the pitch axis 22, a leading edge 28 and a trailing edge 30. The view in Fig. 3 is directed on the pressure side 38. The tip section 40 has a chord line 42 (not shown) arranged in the drawing plane. This means the reference plane 44 is normal to the drawing plane at the position of the pitch axis 22.

A main section 52 in the example shown extends from a longitudinal position where the wind turbine rotor blade 18 has its maximum chord length 54 up to a longitudinal position of about 90% of the blade length 56. The tip section 40 includes the blade tip 48 arranged in the reference plane 44. Between the main section 52 and the tip section 40, the wind turbine rotor blade comprises a short transition section 58.

Figure 4 shows the transition section 58 and the tip section 44 of the wind turbine rotor blade 18 of Fig. 3 in greater detail. One can see that the trailing edge 30 in the tip section 40 is an essentially straight or almost straight line arranged at an angle of about 5° with reference to the reference plane 44. Only at the outermost end of the tip section 40, at the blade tip 48, the tip section 40 has a rounded section forming a transition between the straight trailing edge 30 and the leading edge 28. Fig. 4 also shows that the leading edge 28 in the tip section 40 includes a significant curvature with a radius of about twice the length of the longest chord line 42 within the tip section 40.

The effect of the straight or almost straight trailing edge 30 in the tip section 40 is that the flow passing by the tip section 40 roughly corresponds to the chord direction. This is illustrated by the arrows 50 that are almost perfectly straight, in particular when compared to the arrows 50 of Fig. 2.

### List of reference numerals

- 10: wind turbine
- 12: wind turbine tower
- 14: nacelle
- 16: wind turbine rotor hub
- 18: wind turbine rotor blade
- 20: root section
- 22: pitch axis
- 24: rotor axis
- 26: main section
- 28: leading edge
- 30: trailing edge
- 32: flat section
- 34: chord line
- 36: suction side
- 38: pressure side
- 40: tip section
- 42: chord line
- 44: reference plane
- 46: conventional tip section
- 48: blade tip
- 50: arrow
- 52: main section
- 54: maximum chord length
- 56: blade length
- 58: transition section

## Claims

1. A wind turbine rotor blade (18) comprising
• a root section (20) defining a pitch axis (22),
• a tip section (40) including a blade tip (48) and a chord line (42),
• a blade length (56),
• a leading edge (28),
• a trailing edge (30), and
• a local chord length measured between the leading edge (28) and the trailing edge (30),
• wherein a reference plane (44) is defined such that it includes the pitch axis (22) and such that the chord line (42) is normal to the reference plane (44), **characterised in that**
• in the tip section (40), the trailing edge (30) is an essentially straight line arranged at an angle in a range of 0° to 20° with reference to the reference plane (44).

2. The wind turbine rotor blade (18) of claim 1, **characterised in that** the tip section (40) has a length in a range of 0.2 % to 1.5 % of the blade length (56) measured from the blade tip (48).

3. The wind turbine rotor blade (18) of claim 1 or 2, **characterised in that** the leading edge (28) in the tip section (40) has a radius of curvature smaller than four times the maximum of the local chord length in the tip section (40).

4. The wind turbine rotor blade (18) of any of the claims 1 to 3, **characterised in that** the trailing edge (30) in the tip section (40) comprises a radius of curvature larger than 5 % of the blade length (56).

5. The wind turbine rotor blade (18) of any of the claims 1 to 4, **characterised in that** the tip section (40) comprises a rounded section at the blade tip (48) extending over less than 0.05 % of the blade length (56).

6. The wind turbine rotor blade (18) of any of the claims 1 to 5, **characterised in that** the blade tip (48) is arranged in the reference plane (44).

7. The wind turbine rotor blade (18) of any of the claims 1 to 6, **characterised in that** the wind turbine blade (18) comprises a pre-bend.

8. The wind turbine rotor blade (18) of any of the claims 1 to 7, **characterised in that** in the tip section (40), the trailing edge (30) is located at a distance from the reference plane (44) in a range of 0 % to 10 % of the local chord length.

9. The wind turbine rotor blade (18) of any of the claims 1 to 8, **characterised in that** in the tip section (40), the leading edge (28) is located at a distance from the reference plane (44) in a range of 100 % to 90 % of the local chord length.

10. The wind turbine rotor blade (18) of any of the claims 1 to 9, **characterised in that** in the tip section (40), the position along the local chord length where an aerodynamic profile of the tip section (40) has its maximum thickness is located at a distance from the reference plane (44) in the direction towards the leading edge (28).

11. The wind turbine rotor blade (18) of any of the claims 1 to 10, **characterised in that** the wind turbine rotor blade (18) comprises a main section (52) extending from a longitudinal position where the local chord length is maximum to a longitudinal position of 70 % of the blade length (56) measured from the root section (20), wherein in the main section (52) the trailing edge (30)is located at a distance from the reference plane (44) in a range of 40 % to 90 % of the local chord length.

12. The wind turbine rotor blade (18) of any of the claims 1 to 11, **characterised in that** the wind turbine rotor blade (18) comprises a main section (52) extending from a longitudinal position where the local chord length is maximum to a longitudinal position of 70 % of the blade length (56) measured from the root section (20), wherein in the main section (52) the leading edge (28) is located at a distance from the reference plane (44) in a range of 10 % to 60 % of the local chord length.

13. The wind turbine rotor blade (18) of claim 11 or 12, **characterised in that** the wind turbine rotor blade (18) comprises a transition section (58) arranged between the main section (52) and the tip section (40), wherein in the transition section (58) the trailing edge (30) transitions from its position in the main section (52) into its position in the tip section (40), and/or the leading edge (28) transitions from its position in the main section (52) into its position in the tip section (40).
